# EUROPÄISCHE PATENTANMELDUNG

(11) **EP 2 631 065 A1**
(43) Veröffentlichungstag der Anmeldung: **28.08.2013**
(21) Anmeldenummer: 13000870.9
(22) Anmeldetag: 21.02.2013
(51) Int. Cl.: B32B 7/12, B32B 27/04

(54) **Reinigungs-Pad für glatte oder leicht strukturierte, feste Oberflächen**

(30) Priorität: 23.02.2012 DE 102012101476; 12.06.2012 DE 202012102128 U
(71) Anmelder: Pohlmann, Ulrich, 48683 Ahaus (DE)
(72) Erfinder: Pohlmann, Ulrich, 48683 Ahaus (DE)
(74) Vertreter: Hoffmeister, Helmut

(57) **Zusammenfassung**

Die Erfindung betrifft ein Reinigungs-Pad für glatte oder leicht strukturierte, feste Oberflächen. Solche Pads finden insbesondere Verwendung zur Reinigung von Display-Oberflächen elektronischer Geräte.

Bekannte Reinigungstücher lassen sich in der Regel nicht an die Objekte anhaften. Andere bekannte Reinigungs-Pads, welche an der einen Seite eine Reinigungsschicht und an der anderen Seite eine Haftschicht aufweisen, lassen sich zwar an die Geräte anhaften, erleiden jedoch mit fortlaufendem Gebrauch bleibenden Verformungen, wodurch sich die Hafteigenschaften verschlechtern und das Pad insgesamt zunehmend unansehnlicher wird.

Das erfindungsgemäße Reinigungs-Pad ist sowohl widerstandsfähig gegen mechanische Einwirkungen als auch beim Gebrauch ausreichend biegsam. Es verfügt über wenigstens eine Trägerschicht (1), wenigstens eine textile Reinigungsschicht (3), und wenigstens einen dazwischen eingeklebten Folienabschnitt (2) von erhöhter mechanischer Stabilität. Die Trägerschicht (1) weist auf ihrer der Reinigungsschicht (3) gegenüber liegenden Seite ein selbstklebendes oder adhäsives Mittel (8) von einer geringen Haftklebeeigenschaft auf, die es erlaubt, das an eine feste Oberfläche angedrückte Reinigungs-Pad von dieser durch Abziehen wieder zu lösen. Weiterhin ist in das Reinigungs-Pad wenigstens eine zusätzliche, nicht dehnbare Verstärkungsschicht (5) eingebaut.

## Beschreibung

Die Erfindung betrifft ein flächenhaftes, flexibles Reinigungs-Pad in SandwichAnordnung für glatte oder leicht strukturierte, feste Oberflächen, umfassend:
- wenigstens eine Trägerschicht,
- wenigstens eine textile Reinigungsschicht,
- und wenigstens einen dazwischen eingeklebten Folienabschnitt von erhöhter mechanischen Stabilität,
wobei die Trägerschicht auf ihrer der Reinigungsschicht gegenüber liegenden Seite ein selbstklebendes oder adhäsives Mittel von einer geringen Haftklebeeigenschaft aufweist, die es erlaubt, das an eine feste Oberfläche angedrückte Reinigungs-Pad aus dieser durch Abziehen wieder zu lösen.

Aus DE 21 21 388 A ist ein Reinigungskissen bekannt, aufweisend eine Trägerschicht aus geschäumtem Kunststoff, eine Reinigungsschicht aus Nylon-Faservlies und eine Zwischenschicht aus Polyurethanpolymerisat, welche zumindest temporäre Klebeeigenschaften aufweist, so dass das Reinigungskissen als Laminat ausgebildet ist. In der Trägerschicht befindet sich eine Kammer enthaltend Detergenz. Das Reinigungskissen ist vor allem für den Haushalt vorgesehen.

In DE 28 28 055 A1 ist ein Reinigungstuch für feste Oberflächen, wie Fensterglas, beschrieben, das eine ein Reinigungsmittel aufnehmende Schaumstoffschicht, eine wasserundurchlässige Zwischenschicht und eine Vliesstoffschicht aufweist, wobei auf die Schaumstoffschicht die wasserundurchlässige Zwischenschicht und auf diese die Vliesstoffschicht aufkaschiert ist.

Ein auf demselben Grundaufbau (ausgenommen Kammer bzw. Reinigungsmittel) basierendes Reinigungs-Pad, Wischblatt genannt, ist durch EP 1 834 758 B1 offenbart worden. Als Zwischenschicht ist ein mit der Reinigungsschicht und der Trägerschicht verklebter PET-Film vorgesehen, welcher erhöhte mechanische Festigkeit aufweist. Nachteilig ist, dass der dünne PET-Film nicht imstande ist, eine ausreichende Stabilität des ganzen Wischblattes zu sichern. Nach mehrmaligem Gebrauch bilden sich infolge der mechanischen Einwirkung lokale Falten und manche Stellen der Reinigungsschicht lösen sich ab. Dies trifft insbesondere die größeren, beispielsweise Checkkarten-große Formate des Wischblattes.

Die Aufgabe der Erfindung ist, ein neuartiges Reinigungs-Pad der eingangs genannten Art zu entwickeln, das gegen die mechanische Einwirkung widerstandsfähiger und trotzdem bei der Handhabung und beim Gebrauch ausreichend biegsam ist.

Diese Aufgabe ist durch ein gattungsgemäßes Reinigungs-Pad dadurch gelöst, dass
- die Trägerschicht eine Dicke zwischen 50 µm und 5000 µm aufweist,
- auf den Folienabschnitt eine Klebeschicht von einer Dicke zwischen 21 µm und 150 µm auflaminiert ist,
- und in das Reinigungs-Pad wenigstens eine zusätzliche, nicht dehnbare Verstärkungsschicht eingebaut ist.

Vorzugsweise liegt die Dicke der Trägerschicht in einem Bereich zwischen 500 µm und 3000 µm, bevorzugt zwischen 801 µm und 2000 µm, insbesondere bevorzugt zwischen 801 µm und 1200 µm. Eine relativ dicke Trägerschicht wirkt polsternd auf die empfindlichen Oberflächen der zu reinigenden Gegenstände, wie Bildschirm eines PC-Monitors oder Display eines PC-Tabletts und erleichtert die Handhabung des Reinigungs-Pads.

Die zusätzliche Verstärkungsschicht kann zwischen der besagten Klebeschicht und der Reinigungsschicht angeordnet sein. Die Dicke der Klebeschicht beträgt 60 µm bis 120 µm, bevorzugt 70 µm bis 90 µm, besonders bevorzugt 80 µm. Die relativ dicke Klebeschicht hat auch eine polsternde Wirkung.

Die zusätzliche Verstärkungsschicht kann beispielsweise aus folgenden Materialgruppen ausgewählt sein:
- Metallfolie,
- Kunststofffolie,
- textile Netzwerkschicht, wie Gelege oder Gewebe,
- polymere Netzwerkschicht, wie Gelege oder Gewebe,
- polymere Vliesschicht, wie nicht dehnbare Polyesterschicht,
- oder eine Mischung (im Sinne der Schichtbauweise) davon.

Im Falle einer Metallfolie soll ein spezieller, marktüblicher Klebstoff für Metall-Kunststoff-Verbindungen eingesetzt werden.

Die Kunststofffolie für die Verstärkungsschicht kann eine nicht bzw. kaum dehnbare Polyesterfolie oder eine so genannte PET-Folie (Polyethylenterephthalat) sein, die unter dem Handelsnamen Mylar A (Du Pont) in unterschiedlichen Standardstärken angeboten wird. Die Standardstärken liegen im Bereich zwischen 23 µm und 190 µm. Die PET-Folie zeichnet sich durch ihre hervorragende Zugfestigkeit aus, d.h. sie ist bi- oder mehraxial (in Bezug auf Flachseite) kaum oder nicht dehnbar. Für eine die Stabilität sichernde, zusätzliche Verstärkungsschicht wird eine Dicke zwischen 50 µm und 200 µm gewählt. Die PET-Folie kann auf wenigstens einer ihrer Flachseiten mit Klebstoff beschichtet sein.

Sowohl für die Trägerschicht als auch für den besagten Folienabschnitt können Folien mit unterschiedlichen Additiven, wie Füll- oder Verstärkungsstoffe, gewählt werden. Ferner kann der Folienabschnitt zwecks erhöhter mechanischer Belastbarkeit armiert sein. Wichtige Füllstoffe sind unter anderem: Kreide, Sand, Kieselgur, Glasfasern und -kugeln, Zinkoxid, Quarz, Holzmehl, Stärke, Graphit, Ruße und Talkum. Die teilchenförmigen Füll- oder Verstärkungsstoffe verbessern zusätzlich die mechanischen Eigenschaften des Materials, da sie in der Kunststoffmatrix nahezu isotrop, also richtungsunabhängig sind. Einstellbar sind beispielsweise Biegesteifigkeit, Knickwiderstand und Dehnelastizität der Kunststofffolie.

Die Verstärkungsschicht kann auch in Form eines Laminats aus wenigstens zwei mit

Klebstoff durchtränkten oder beschichteten Netzwerk- oder Gewebeabschnitten gebildet sein, deren Dehnungsachsen zueinander senkrecht gerichtet sind, so dass sich ein nicht oder kaum dehnbares Flachgebilde ergibt.

Für die Trägerschicht kann ein offen- oder geschlossenporiger Weichschaum, vorzugsweise Mikroschaum auf Polyurethan-, Polyethylen- oder Silikonbasis vorgesehen sein. Hier bietet sich zum Beispiel ein Silikonkautschuk an.

Zur Bildung einer Schicht mit geringer Haftklebeeigenschaft kann ein an sich bekanntes, weiches, anschmiegsames Silikongel geeignet sein. Das Silikongel ist hydrophob, nicht toxisch und nicht allergen. Mit denselben Eigenschaften zeichnet sich auch der Akrylatkleber aus, also ein Klebstoff, welcher im Medizinbereich zum direkten Kontakt mit der menschlichen Haut zugelassen ist. Da die genannten Klebstoffe mit Erfolg im Medizinbereich Verwendung finden, sind sie auch beim Einsatz im Zusammenhang mit den erfindungsgemäßen Reinigungs-Pads unbedenklich und einsetzbar.

Die Trägerschicht kann aus einem Hydrokolloid-Material, wie dünne Hydrokolloid-Folie, bestehen. Solche Hydrokolloid-Folien, in Medizinbereich Hydrokolloidplatten genannt, stellen eine Klebemasse dar, die beispielsweise aus zwei Polymeren zusammengesetzt ist, nämlich aus Polyisobutylen und Natrium-Carboxymethylcellulose (NaCMC). Die wieder lösbare, ein viskoses Kontaktgel bildende Hydrokolloid-Folie wird auf den Körper des Patienten angeklebt. Das Polyisobutylen ist ein hydrophobes, kautschukähnliches Elastomer, das direkt für die Klebeeigenschaften verantwortlich ist. Diese Eigenschaften prädestinieren auch das Hydrokolloid-Material zum Einsatz beim Reinigungs-Pad gemäß vorliegender Erfindung.

Die Trägerschicht kann aus einem bevorzugt polsternden Material, wie besagter Silikonkautschuk (Silikon-Mikroschaum), gebildet sein, dessen wenigstens eine Flachseite mit einem Hydrokolloid-Klebstoff beschichtet ist.

Die Reinigungsschicht kann aus gewirktem, gestricktem, gewebtem oder nicht gewebtem Textilmaterial bestehen. Vorzugsweise kommt ein Mikrofaserflächengebilde, beispielsweise aus Polyamid- und/oder Polyester-Mikrofasern zum Einsatz. Vorzugsweise weist das Mikrofaserflächengebilde eine Dicke bis 50 µm auf. Die Fasereinheiten der Chemiefasern können den Wert 1,0 bis 0,001 dtex erzielen. Aus diesen feinsten Chemiefasern, Super-Mikrofaser genannt, können so genannte Super-Mikrofaserwirbelvliese hergestellt werden.

Das Mikrofaserflächengebilde kann auch aus anderen synthetischen Chemiefasern, wie Polyacryl-, Elastan- oder Polychloridfasern bzw. aus cellulosischen Chemiefasern, wie Viskose oder Acetat gefertigt sein.

Als Mikrofaserflächengebilde kann auch Kunstleder eingesetzt werden.

Es ist denkbar, die Reinigungsschicht mit einem bakterizidem Mittel, wie Silber-, Kupfer- oder Goldionen zu versetzen. Die Metallionen können auf bekannte Weise, z. B. durch Aufsprühen oder Durchtränken auf die Reinigungsschicht, hier: auf die Mikrofaserschicht aufgetragen sein, wie es bei marktgängigen Reinigungstüchern für den Haushalt der Fall ist.

Überdies kann die Reinigungsschicht mit einem Tensid versetzt sein, das das Abspülen mit Wasser effektiver macht.

Das Reinigungs-Pad gemäß Erfindung kann einen runden, ovalen polygonalen, vorzugsweise rechteckigen und geringfügig an seinen Ecken abgerundeten Umriss haben. Weiterhin kann das Reinigungs-Pad eine gegenständliche Form, beispielsweise eine herzchen-, ball- oder trikotförmige Form haben.

Von großem Vorteil ist, dass die zusätzliche Verstärkungsschicht die Stabilität des Reinigungs-Pads erheblich verbessert bei Beibehaltung einer gewissen Biegsamkeit, die es erlaubt, leicht konkave oder konvexe Bereiche der zu reinigenden Oberflächen zu behandeln. Besonders vorteilhaft ist darüber hinaus, dass sich eine federnde Eigenschaft des Grundmaterials auf das Reinigungs-Pad überträgt. So wie eine flexible Kunststofffolie selbst, welche in ihrer Ausgangsposition flach und eben ist und nach einer manuellen Verbiegung innerhalb ihres elastischen Bereiches wieder in die Ausgangsposition zurückfedert, federt auch das mit einer solchen Folie versehene Reinigungs-Pad in seine Ausgangslage zurück.

Das Reinigungs-Pad gemäß Erfindung kann eine breite Verwendung im Haushalt und insbesondere bei der Unterhaltungselektronik finden. Die kleinformatigen Pads können beispielsweise zum Reinigen empfindlicher Oberflächen von tragbaren digitalen Medienabspielgeräten, wie Display eines Mobiltelefons, eines IPod's, eines Smartphones etc. eingesetzt werden. Nicht zuletzt kann das Reinigungs-Pad gemäß Erfindung bei den empfindlichen medizinischen Geräten, die oft mit einem Display versehen sind, Verwendung finden.

Die Reinigungs-Pads von größerem Format können erfolgreich zum Reinigen von TV- und PC-Bildschirmen eingesetzt werden.

Ferner kann das Reinigungs-Pad gemäß Erfindung in ein Flachetui fürs Handy oder Smartphone eingebaut sein.

Weiterhin kann das Reinigungs-Pad gemäß Erfindung auf einen Informations- oder Werbeträger aufgeklebt sein. Die Reinigungsschicht kann ebenfalls mit einer Werbebotschaft oder mit bestimmten Zeichen, Symbolen und/oder Figuren versehen sein.

Die Erfindung ist in Ausführungsbeispielen anhand der Zeichnung näher erläutert. Die Figuren zeigen:
- Fig. 1: einen Schichtaufbau des Reinigungs-Pads gemäß Erfindung, in einem schematischen Querschnitt;
- Fig. 2: das Reinigungs-Pad gemäß Fig. 1 in einer Explosionsdarstellung;
- Fig. 3: das Reinigungs-Pad gemäß Fig. 1, aufgeklebt auf eine Rückseite eines PC-Flachmonitors;
- Fig. 4: das Reinigungs-Pad gemäß Fig. 1, aufgeklebt auf einen Werbeartikel, in Draufsicht auf eine Flachseite des Werbeartikels;
- Fig. 5: die Vorderseite eines Smartphones während des Reinigungsvorganges;
- Fig. 6: das Reinigungs-Pad gemäß Fig. 1, aufgeklebt auf die Rückseite eines Smartphones,
- Fig. 7: ein Reinigungs-Pad mit Hydrokolloid, in einer schematischen Darstellung;
- Fig. 8: ein Reinigungs-Pad in einer weiteren Ausführungsform, ebenso in einer schematischen Darstellung;
- Fig. 9: einen Schichtaufbau eines anderen Reinigungs-Pads gemäß Erfindung, in einem schematischen Querschnitt;
- Fig. 10: das Reinigungs-Pad gemäß Fig. 9 in einer Explosionsdarstellung.

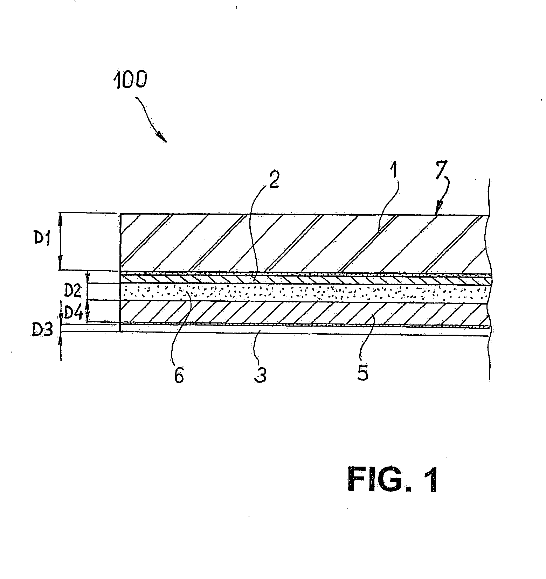

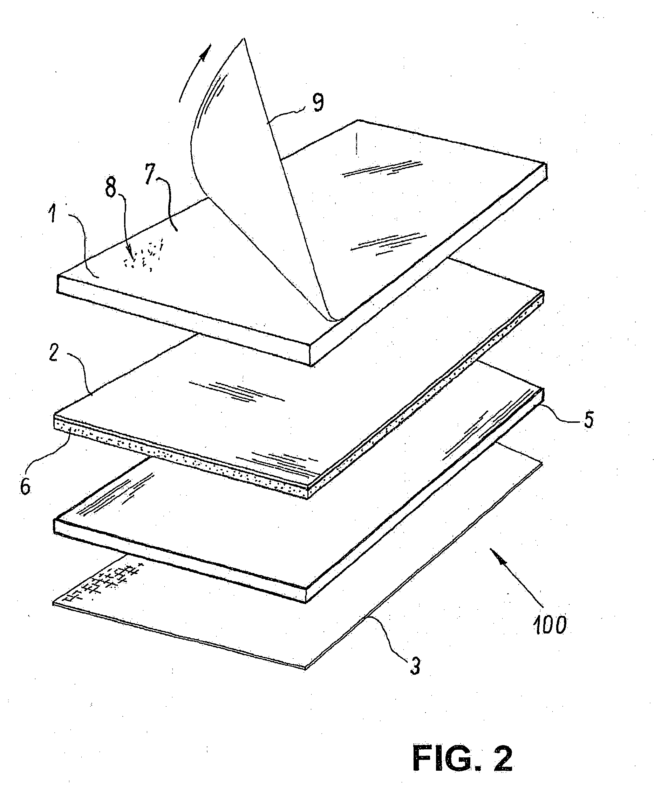

In Figuren 1 und 2 ist ein rechteckiges Reinigungs-Pad 100 schematisch abgebildet, umfassend (in Reihenfolge in Richtung Mikrofaserflächengebilde) eine aus mikroporösem Polyurethanschaum gefertigte Trägerschicht 1 von einer Dicke D1 = 900 µm, einen darunter liegenden Folienabschnitt 2 aus PET-Folie von einer relativ kleinen Dicke, die den Wert 20 µm nicht überschreitet, eine Klebeschicht 6 von einer Dicke D2 = 80 µm, eine zusätzliche Verstärkungsschicht 5 von einer Dicke D4 = 80 µm und schließlich eine Reinigungsschicht 3.

Die Trägerschicht 1 ist auf ihrer der Reinigungsschicht 3 abgewandten Oberfläche 7 mit einem selbstklebenden Mittel 8 von einer geringen Haftklebeeigenschaft beschichtet. Im vorliegenden Fall stellt das Mittel 8 eine leicht klebende Silikongel-Beschichtung dar. An der Silikongel-Beschichtung haftet ein dünnes Schutzfolienelement 9 an, das sich per Hand abziehen (vgl. Fig. 2, oben) lässt. Nach Abziehen des Schutzfolienelementes 9 behält das Mittel 8 seine leicht klebende Eigenschaft bei. Im Ergebnis hat das Reinigungs-Pad somit auf der einen Seite eine haftende Eigenschaft, welche durch das Mittel 8 bewirkt und langfristig gewährleistet wird, und auf der anderen Seite eine reinigende Eigenschaft, welche durch die Reinigungsschicht 3 bewirkt wird.

Die Hafteigenschaft kann auch durch strukturbedingte Adhäsionskräfte einer entsprechend konfigurierten Trägerschicht 1 bewirkt werden. Solche strukturbedingten Adhäsionskräfte ergeben sich beispielsweise bei Verwendung eines Kunststoffschaums, welcher an seiner Oberfläche eine bläschenartige Struktur aufweist.

Der erste Folienabschnitt 2 aus Polyethylenterephthalat ist beidseitig klebbeschichtet.

Die zusätzliche Verstärkungsschicht 5 kann alternativ durch andere thermoplastischen Kunststofffolien, wie Polyester- oder Polyamidfolie, durch eine Metall- oder Verbundfolie oder durch ein maschiges, auch textiles, Flachgebilde, wie Gitter oder Gewebe gebildet sein.

Die Reinigungsschicht 3 besteht im vorliegenden Fall aus einer Polyamid/Polyester-Mikrofaserkombination oder aus einem Polyester-Mikrofaserflächengebilde von einer Dicke D3 = 50 µm.

Die einzelnen Schichten des Produktes, insbesondere PET-Folienabschnitte 2 und 5 und schaumartige Trägerschicht 1 können auf wenigstens einer ihrer Flachseiten mit einem Klebstoff von einer geringen Haftklebeeigenschaft und/oder mit einem Klebstoff von einer stärkeren Haftklebeeigenschaft beschichtet sein. Die geringe Haftklebeeigenschaft lässt sich beispielsweise mit Post-it-Haftnotizen der Firma 3M vergleichen. Die stärkere Haftklebeeigenschaft entspricht beispielsweise einer nicht lösbaren Papier/Papier- oder Kunststoff/Kunststoff-Verklebung. Wesentlich ist, dass im Ergebnis die nach außen weisende Oberfläche der Trägerschicht 1 eine geringe Klebekraft aufweist, so dass das Reinigungs-Pad immer wieder auf eine Oberfläche gehaftet und wieder davon gelöst werden kann, während im Gegensatz dazu an den nach innen weisenden Flächen der Schichten des Reinigungs-Pads irreversibel miteinander verbundene Klebverbindungen vorliegen, weil zumindest ein der beiden jeweils miteinander in Kontakt kommenden Oberflächen mit einem stark klebenden Kleber versehen ist.

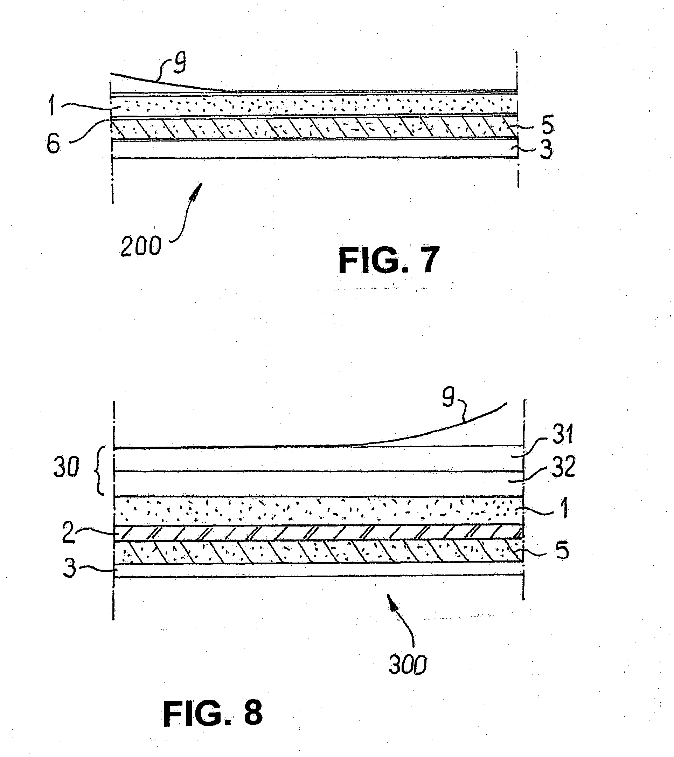

In Fig. 7 ist ein weiteres, mit Bezugszahl 200 bezeichnetes Reinigungs-Pad gezeigt, welches folgende Schichtung, beginnend mit Schutzfolienelement 9, aufweist:
- eine hydrokolloidale Trägerschicht 1 von einer Dicke D1 = 1200 µm, wobei die Trägerschicht 1 auf ihrer dem Schutzfolienelement 9 zugewandten Seite mit Silikongel und auf der gegenüberliegenden Seite mit Akrylatkleber (Klebeschicht 6 von einer Dicke etwa 100 µm) beschichtet ist, welcher den in Fig. 1 gezeigten Folienabschnitt 2 ersetzt,
- eine mit dem Akrylatkleber (Klebschicht 6) verbundene, zusätzliche Verstärkungsschicht 5,
- und die Reinigungsschicht 3 aus Mikrofaservlies.

Die relativ dicke, elastisch verformbare hydrokolloidale Trägerschicht 1, verstärkt mit Klebeschichten gewährleistet eine ausreichende mechanische Stabilität, die noch mit der Verstärkungsschicht 5 erhöht wird.

Ein anderes Reinigungs-Pad (Bezugszahl 300) ist der Fig. 8 zu entnehmen.

Das wieder lösbare Schutzfolienelement 9 ist über ein Laminat 30 mit der darunter liegenden Trägerschicht 1 aus Silikon-Mikroschaum verbunden. Das Laminat 30 weist eine obere, dem Schutzfolienelement 9 zugewandte Klebeschicht 31 aus Silikongel und eine untere Klebeschicht 32 aus Akrylat auf. Die Klebekraft der unteren Klebeschicht ist wesentlich größer als die des Silikongels. So stellt das Laminat eine Einrichtung zum temporären Ankleben des Reinigungs-Pads 300 an einem Substrat dar. Unterhalb der Trägerschicht 1 aus Silikon-Mikroschaum befindet sich der Folienabschnitt 2, welcher über die Verstärkungsschicht 5 mit der Reinigungsschicht 3 aus Mikrofaservlies klebend verbunden ist.

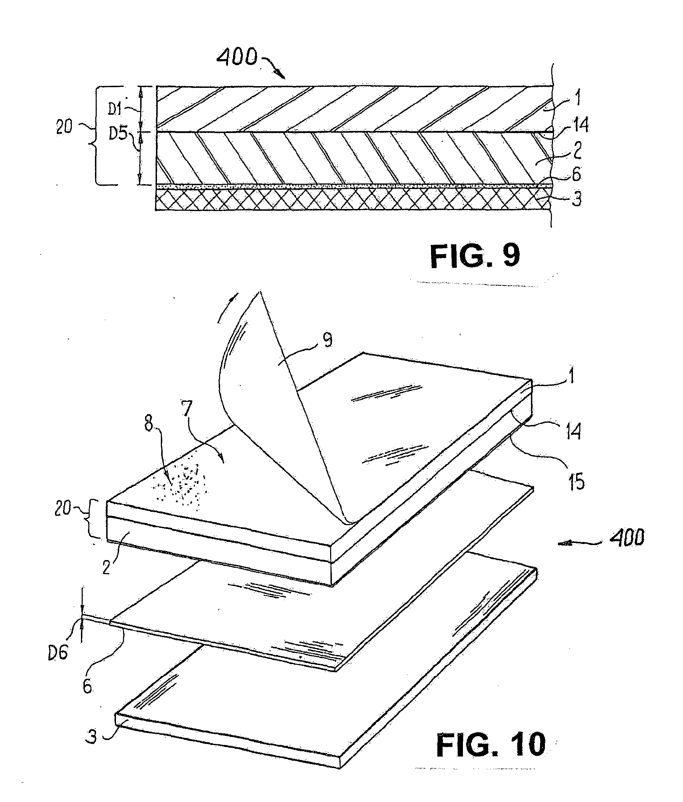

In Figuren 9 und 10 ist ein Reinigungs-Pad 400 schematisch abgebildet, umfassend (in Reihenfolge in Richtung Mikrofaserflächengebilde) die aus mikroporösem Polyurethanschaum gefertigte Trägerschicht 1 von einer Dicke D1 = 0,3 mm, einen Klebefilm 14, den darunter liegenden Folienabschnitt 2 aus PET-Folie von einer relativ großen Dicke D5, die im vorliegenden Fall 0,5 mm beträgt, eine Klebeschicht 6 von einer Dicke D6 = 25 µm, und schließlich eine Reinigungsschicht 3.

Die Reinigungsschicht 3 besteht im vorliegenden Fall aus einer Polyamid/Polyester-Mikrofaserkombination oder aus einem Polyester-Mikrofaserflächengebilde und ist 80 µm dick.

Die Trägerschicht 1 bildet zusammen mit dem Folienabschnitt 2 einen nicht lösbaren Folienverbund 20, der auf seiner der Reinigungsschicht 3 zugewandten Seite zusätzlich mit einem Klebefilm 15 beschichtet ist.

Optional ist es vorgesehen, zwischen der Klebeschicht 6 und der Reinigungsschicht 3 eine zusätzliche Verstärkungsschicht 5 (in Figuren 9 und 10 nicht dargestellt) anzuordnen.

Die Trägerschicht 1 ist auf ihrer dem Folienabschnitt 2 abgewandten Oberfläche 7 mit einem selbstklebenden Mittel 8 von einer geringen Haftklebeeigenschaft beschichtet. Im vorliegenden Fall stellt das Mittel 8 eine leicht klebende Silikongel-Beschichtung dar. An der Silikongel-Beschichtung haftet ein dünnes Schutzfolienelement 9 an, das sich per Hand abziehen (vgl. Fig. 10, oben) lässt. Nach Abziehen des Schutzfolienelementes 9 behält das Mittel 8 seine leicht klebende Eigenschaft bei. Im Ergebnis hat das Reinigungs-Pad somit auf der einen Seite eine haftende Eigenschaft, welche durch das Mittel 8 bewirkt und langfristig gewährleistet wird, und auf der anderen Seite eine reinigende Eigenschaft, welche durch die Reinigungsschicht 3 bewirkt wird.

Die Hafteigenschaft kann auch durch strukturbedingte Adhäsionskräfte einer entsprechend konfigurierten Trägerschicht 1 bewirkt werden. Solche strukturbedingten Adhäsionskräfte ergeben sich beispielsweise bei Verwendung eines Kunststoffschaums, welcher an seiner Oberfläche eine bläschenartige Struktur aufweist.

Der Folienabschnitt 2 kann alternativ durch andere thermoplastischen Kunststofffolien, wie Polyester- oder Polyamidfolie oder durch ein maschiges, auch textiles, Flachgebilde, wie Gitter oder Gewebe aus Polymerfasern gebildet sein, welches ebenso mit einem Klebefilm beschichtet werden kann.

Wie oben aufgeführt, sind die einzelnen Schichten des Produktes, der Folienverbund inklusive, irreversibel miteinander verbunden. Die stärkere, durch den Klebefilm 14 und die Klebeschicht 6 hervorgerufene Haftklebeeigenschaft entspricht beispielsweise einer nicht lösbaren Papier/Papier- oder Kunststoff/Kunststoff-Verklebung. Der extrem dünne Klebefilm 15 (beispielsweise 20 µm) und die mit dem Klebefilm in flächigen Kontakt kommende Klebeschicht 6 ergeben zusammen eine Gesamtdicke von etwa 45 bis 50 µm. Alle aus Kunstharz bestehenden, im Reinigungs-Pad 400 enthaltenden Klebstoffe sind nach der Verklebung elastisch.

Wesentlich ist, dass im Ergebnis die nach außen weisende Oberfläche 7 der Trägerschicht 1 eine geringfügige Klebekraft aufweist, so dass das Reinigungs-Pad immer wieder auf eine glatte Oberfläche gehaftet und wieder davon gelöst werden kann. Die Oberfläche des zu reinigenden Gegenstands kann plan, konkav und/oder konvex sein.

Von besonderem Vorteil ist, dass der Folienverbund 20, einem Integralschaum ähnelnd, unterschiedliche physikalische bzw. mechanische Eigenschaften aufweist, die für die Lösung der gestellten Aufgabe von Bedeutung sind. So kann beispielsweise die Trägerschicht dehnbar und relativ weich, dagegen der im Folienverbund verbleibende Folienabschnitt kaum oder nicht dehnbar, jedoch ausreichend biegsam sein.

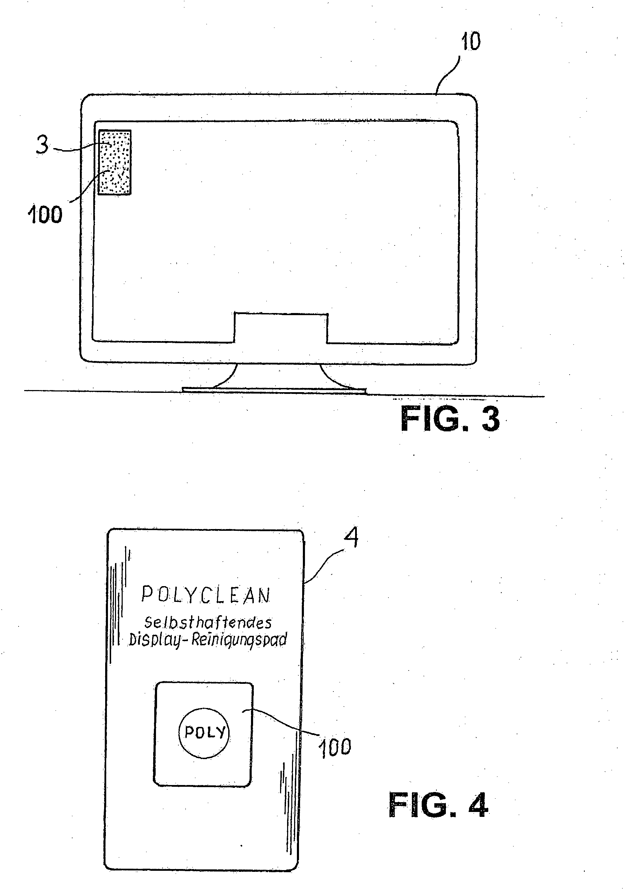

Die Fig. 3 zeigt das an der Rückseite eines PC-Monitors 10 in Griffweite angeklebtes Reinigungs-Pad 100 von einem Format etwa 5 cm x 10 cm, nach Abziehen des Schutzfolienelementes 9. Das Reinigungs-Pad 100 kann wieder per Hand aus dem PC-Monitor 10 abgezogen und eingesetzt werden. Anstelle des Reinigungs-Pads 100 können Reinigungs-Pads 200; 300 oder 400 angeklebt werden.

In Fig. 4 ist eine Trägerkarte 4 in Checkkartenformat (etwa 5 cm x 9 cm) dargestellt, an dessen eine Seite ein kleinformatiges (z.B. 2,5 cm x 3,0 cm) Reinigungs-Pad 100 lösbar aufgeklebt ist. Das Reinigungs-Pad 100 trägt ein Firmenlogo und eignet sich insofern sehr gut als Werbeartikel.

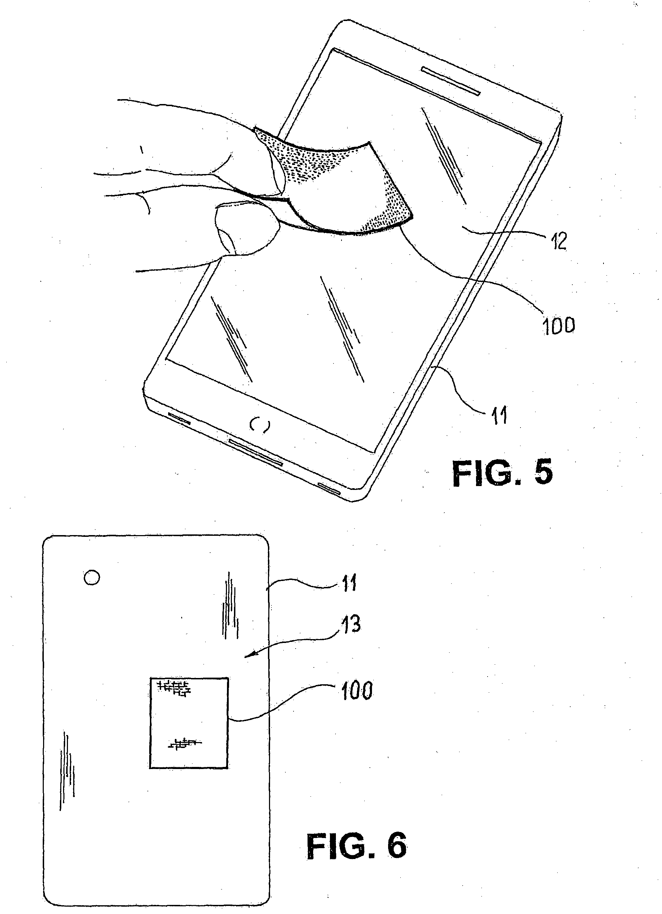

In den Figuren 5 und 6 ist das erfindungsgemäße Reinigungs-Pad 100 zum einen beim Reinigungsvorgang und zum anderen aufgehaftet an der Rückseite 13 eines Smartphones 11 dargestellt. Das Gehäuse des Smartphones 11 ist im Wesentlichen planeben. Das Reinigungs-Pad 100 haftet am weitgehend glatten Gehäuse und kann jederzeit vom Benutzer abgenommen werden um insbesondere die Oberfläche des Displays 12 zu reinigen. Der Benutzer hält das Pad 100 beim Reinigungsvorgang in der Regel mit Finger und Daumen oder drückt es nur mit einem Finger gegen die zu reinigende Oberfläche. Wie in Figur 6 gut ersichtlich, kommt es hierbei in der Regel zu Verformungen des Pads 100. Diese Verformungen bewegen sich bei normalem Gebrauch im flexiblen Bereich und werden durch die dem Reinigungs-Pad 100 innewohnende Spannkraft zurückgeführt, sobald das Pad 100 nach Benutzung wieder an eine Haftstelle gehaftet wird. Die innere Spannkraft des Reinigungs-Pads 100 wird bewirkt durch die in das Pad 100 integrierte Verstärkungsschicht 5.

**Bezugszeichenliste:**

| Bezugszeichen | Bezeichnung |
|---|---|
| 1 | Trägerschicht |
| 2 | Folienabschnitt |
| 3 | Reinigungsschicht |
| 4 | Trägerkarte |
| 5 | Verstärkungsschicht |
| 6 | Klebeschicht |
| 7 | Oberfläche |
| 8 | Mittel |
| 9 | Schutzfolienelement |
| 10 | PC-Monitor |
| 11 | Smartphone |
| 12 | Display |
| 13 | Rückseite |
| 14 | Klebefilm |
| 20 | Folienverbund |
| 30 | Laminat |
| 31 | Klebeschicht |
| 32 | Klebeschicht |
| D1, D2, D3, D4, D5, D6 | Dicke |
| 100; 200; 300; 400 | Reinigungs-Pad |

## Patentansprüche

1. Flächenhaftes, flexibles Reinigungs-Pad (100; 200; 300; 400) in SandwichAnordnung für glatte oder leicht strukturierte, feste Oberflächen, umfassend:
- wenigstens eine Trägerschicht (1),
- wenigstens eine textile Reinigungsschicht (3),
- und wenigstens einen dazwischen eingeklebten Folienabschnitt (2) von
erhöhter mechanischer Stabilität,
wobei die Trägerschicht (1) auf ihrer der Reinigungsschicht (3) gegenüber liegenden Oberfläche (7) ein selbstklebendes oder adhäsives Mittel (8) von einer geringen Haftklebeeigenschaft aufweist, die es erlaubt, das an eine feste Oberfläche angedrückte Reinigungs-Pad von dieser durch Abziehen wieder zu lösen,
**dadurch gekennzeichnet, dass**
- die Trägerschicht (1) eine Dicke (D1) zwischen 50 µm und 5000 µm aufweist,
- auf den Folienabschnitt (2) eine Klebeschicht (6) von einer Dicke (D2) zwischen 21 µm und 150 µm auflaminiert ist,
- und in das Reinigungs-Pad wenigstens eine zusätzliche, nicht dehnbare Verstärkungsschicht (5) eingebaut ist.

2. Reinigungs-Pad nach Anspruch 1, **dadurch gekennzeichnet, dass** die zusätzliche Verstärkungsschicht (5) zwischen der Klebeschicht (6) und der Reinigungsschicht (3) angeordnet ist.

3. Reinigungs-Pad nach Anspruch 1 und 2, **dadurch gekennzeichnet, dass** die Verstärkungsschicht (5) aus folgenden Materialgruppen ausgewählt ist:
- Metallfolie,
- textile Netzwerkschicht, wie Gelege oder Gewebe,
- Kunststofffolie,
- polymere Netzwerkschicht, wie Gelege oder Gewebe,
- polymere Vliesschicht, wie nicht dehnbare Polyesterschicht.

4. Reinigungs-Pad nach Anspruch 1, **dadurch gekennzeichnet, dass** die Dicke (D1) der Trägerschicht (1) in einem Bereich zwischen 500 µm und 3000 µm, bevorzugt zwischen 801 µm und 2000 µm, insbesondere bevorzugt zwischen 801 µm und 1200 µm liegt.

5. Reinigungs-Pad nach Anspruch 1, **dadurch gekennzeichnet, dass** die Dicke (D2) der Klebeschicht (6) 60 µm bis 120 µm, bevorzugt 70 µm bis 90 µm beträgt.

6. Reinigungs-Pad nach Anspruch 1, **dadurch gekennzeichnet, dass** die Trägerschicht (1) mit dem Folienabschnitt (2) verklebt ist unter Bildung eines nicht lösbaren Folienverbundes (20).

7. Reinigungs-Pad nach Anspruch 1, **dadurch gekennzeichnet, dass** die Trägerschicht (1) aus offen- oder geschlossenporigem Weichschaum, insbesondere Mikroschaum auf Polyurethan-, Polyethylen- oder Silikonbasis gefertigt ist.

8. Reinigungs-Pad nach Anspruch 1, **dadurch gekennzeichnet, dass** wenigstens die Trägerschicht (1) aus Hydrokolloid-Material besteht oder auf die Trägerschicht (1) ein Hydrokolloid-Kleber auflaminiert ist.

9. Reinigungs-Pad nach Anspruch 1, **dadurch gekennzeichnet, dass** die Reinigungsschicht (3) aus gestricktem, gewirktem, gewebtem oder nicht gewebtem Textilmaterial, bevorzugt Mikrofaservlies, besteht.

10. Reinigungs-Pad nach einem der vorhergehenden Ansprüche, **dadurch gekennzeichnet, dass** an einer der Reinigungsschicht (3) gegenüber liegenden Seite (7) der Trägerschicht (1) eine abziehbare, folienartige Schutzschicht (9) oder eine dafür vorgesehene Trägerkarte (4) angeordnet ist.

11. Reinigungs-Pad nach Anspruch 1, **dadurch gekennzeichnet, dass** die Trägerschicht (1) und/oder der Folienabschnitt (2) aus biologisch abbaubarem Material, wie Polyactid, Celluloseacetat oder Stärke gefertigt ist.

12. Reinigungs-Pad nach einem der vorhergehenden Ansprüche, **dadurch gekennzeichnet, dass** wenigstens die Reinigungsschicht (3) mit einem bakterizidem Mittel, wie Metallionen, versetzt ist.

13. Reinigungs-Pad nach Anspruch 1, **dadurch gekennzeichnet, dass** wenigstens die Reinigungsschicht (3) antistatisch ausgerüstet ist.

14. Reinigungs-Pad nach einem der vorhergehenden Ansprüche, **dadurch gekennzeichnet, dass** das Reinigungs-Pad (100) eingebaut ist in ein Flachetui oder auf eine Trägerkarte (4) bzw. auf einen Informations- oder Werbeträger aufgebracht ist.
